# EUROPÄISCHE PATENTSCHRIFT

(11) **EP 2 977 647 B1**
(45) Veröffentlichungstag und Bekanntmachung des Hinweises auf die Patenterteilung: **26.07.2017**
(21) Anmeldenummer: 15167388.6
(22) Anmeldetag: 12.05.2015
(51) Int. Cl.: F16H 57/04

(54) **GETRIEBE FÜR EIN KRAFTFAHRZEUG**
TRANSMISSION FOR A MOTOR VEHICLE
BOÎTE DE VITESSES D'UN VÉHICULE AUTOMOBILE

(30) Priorität: 30.05.2014 DE 102014107659
(43) Veröffentlichungstag der Anmeldung: 27.01.2016
(73) Patentinhaber: GETRAG B.V. & Co. KG, 74199 Untergruppenbach (DE)
(72) Erfinder: Schweiher, Mark, 74348 Lauffen (DE); Eggert, Ulrich, 41751 Viersen (DE); Hegerath, Andreas, 50126 Bergheim (DE)
(74) Vertreter: Witte, Weller & Partner Patentanwälte mbB

(56) Entgegenhaltungen:
- EP-A2- 1 452 778
- DE-A1- 10 051 356
- DE-A1-102005 005 154
- DE-A1-102009 005 896

## Beschreibung

Die vorliegende Erfindung betrifft ein Getriebe für ein Kraftfahrzeug sowie ein Verfahren zum Betrieb des Getriebes.

Es sind Getriebe für Kraftfahrzeuge bekannt, welche Elemente umfassen, welche durch Öl geschmiert und/oder gekühlt und/oder hydraulisch aktuiert werden. Üblicherweise weist ein Getriebe hierzu einen Ölsumpf auf. Aus dem Stand der Technik bekannte Getriebe weisen üblicherweise einen hohen Ölstand im Getriebe auf um in allen Fahrzuständen eine sichere Ölversorgung gewährleisten zu können.

Die DE 1 801 917 offenbart ein mit Ölsumpfschmierung arbeitendes Getriebe, insbesondere ein Ausgleichgetriebe für den Achsantrieb von Kraftwagen. Innerhalb des Getriebegehäuses ist ein durch eine Trennwand abgeteilter, in seinem oberen Bereich offener Raum so angeordnet, dass sich wenigstens ein Teil des während des Betriebes hochgeschleuderten Öls darin sammelt und dass dieser Raum durch mindestens eine Öffnung mit dem Hauptraum verbunden ist.

In der DE 199 16 377 A1 wird ein Wechselgetriebe offenbart. Das Wechselgetriebe enthält ein Gehäuse, in dessen Innenraum eine sich drehende Getriebegruppe und eine angetriebene Welle, die mit dem Getriebe verbunden ist, gelagert sind. In dem Gehäuse befindet sich eine Schottwand zwischen dem Gehäuse und der Getriebegruppe.

In DE 32 08 100 A1 wird ein Getriebegehäuse mit Tauchschmierung, insbesondere für Radnabengetriebe, offenbart. Das Getriebegehäuse ist im Ruhezustand bis zu einem zulässigen Einfüllniveau mit Öl aufgefüllt, das im Betriebszustand durch rotierende Getriebeteile ebenfalls in Rotationsrichtung mitgenommen wird, so dass das mitgenommene Öl als an einer inneren Mantelfläche des Getriebegehäuses anliegender Ölring mit einer vom Einfüllvolumen vorgegebenen Stärke anliegt, wobei einige der Getriebeteile noch über eine zur Tauchschmierung ausreichende Eintauchtiefe im Öl verfügen. Das Getriebegehäuse weist Mittel auf, mit denen die Eintauchtiefe geänderten Belastungszuständen des Getriebes anpassbar ist.

In WO 2008/076061 A1 werden eine Methode zur Reduktion des Rotationswiderstands von Zahnrädern in einem Getriebe für ein Kraftfahrzeug und ein Getriebe offenbart. In dem Getriebe wird der normale Ölstand (Nⱼ) zum Betrieb mit Zahnradkombinationen des Getriebes während eines Direkt-Gang-Betriebs vorübergehend auf ein Niveau (N₂) verringert, auf welchem niedrigere Zahnräder der Zahnradkombinationen im Wesentlichen ohne Kontakt mit dem Öl in dem Ölsumpf rotieren. Der Ölstand wird nach Einlegen von Zahnradkombinationen wieder auf das normale Niveau (N₁) erhöht. Zu diesem Zweck ist ein Ölsammeltank mit dem Getriebegehäuse verbunden. Der Ölsammeltank weist nicht nur einen oberen Öleingang in der Nähe des Gehäuses auf, welcher während des Betriebs Spritzöl von Zahnradkombinationen des Getriebes der unteren Zahnräder, welche in das Öl in dem Ölsumpf eingetaucht sind, ausgesetzt ist, sondern auch einen unteren Auslass um Öl, welches sich in dem Tank angesammelt hat, zurück zu dem Ölsumpf zu führen. Der Auslass ist während des Direkt-Gang-Betriebs verschließbar, um das Ölniveau in dem Ölsumpf zu senken.

Die EP 1 855 030 A1 offenbart einen Fluidausgleichsbehälter zur Anordnung in einem Gehäuse eines Getriebes. Der Fluidausgleichsbehälter umfasst wenigstens einen Fluideingang zur Aufnahme von Fluid in den Fluidausgleichsbehälter und wenigstens einen Fluidausgang zur Abgabe von Fluid. Der Fluideingang ist größer als der Fluidausgang, so dass der Fluidausgleichsbehälter im Normalbetrieb gefüllt ist, um das Fluidniveau in dem Gehäuse zu senken. Dabei sind an dem Fluideingang von der Viskosität des Fluids abhängige Durchflussbegrenzungsmittel angeordnet, die den Durchfluss von Fluid in den Fluidausgleichsbehälter hinein begrenzen, so dass das Fluidniveau weniger abgesenkt wird, wenn die Viskosität des Fluids einen bestimmten Grenzwert überschreitet.

In DE 103 08 560 A1 wird ein automatisiertes Getriebe für Kraftfahrzeuge vorgeschlagen, insbesondere ein Getriebe in Form eines Vorgelegegetriebes mit einem Getriebegehäuse, wenigstens einem Kraftübertragungsstrang zum Einrichten unterschiedlicher Übersetzungsverhältnisse, der dazu ausgelegt ist, Kraft von einem Getriebeeinfang zu einem Getriebeausgang zu übertragen, wobei Kraftübertragungsglieder aus einem Ölsumpf am Boden des Getriebegehäuses geschmiert werden, und einer Hydraulikanordnung, die wenigstens eine Pumpe und eine Ventilanordnung aufinreist und dazu ausgelegt ist, Schaltglieder zum Ändern des Übersetzungsverhältnisses des Kraftübertragungsstrangs automatisiert zu bestätigen. Dabei ist innerhalb des Getriebegehäuses seitlich neben dem Ölsumpf ein Behälter angeordnet, der als ein Ölreservoir für die Hydraulikanordnung dient.

Von aus dem Stand der Technik bekannten Getrieben umfasste Zahnräder tauchen üblicherweise zumindest teilweise in Öl ein und verursachen abhängig von der Höhe des Ölstandes Plarschverluste.

DE 10 2005 005 154 A1 zeigt ein Fahrzeug mit einem Getriebe mit Trockensumpfschmierung, mit einem Getriebegehäuse und darin angeordneten Getriebezahnrädern, wobei ein unterer Bereich des Getriebegehäuses teilweise mit einem Getriebeöl befüllt ist. Weiterhin ist eine Ölfördereinrichtung vorhanden, die während des Betriebs des Fahrzeugs Getriebeöl aus dem unteren Bereich des Getriebegehäuses in ein Getriebeölreservoir und zu Schmiereinrichtungen des Getriebes fördert, über die Getriebekomponenten während des Betriebs des Fahrzeugs mit Schmieröl versorgt werden. Das Getriebegehäuse, das Getriebeölreservoir, die Ölfördereinrichtung und die in dem Getriebegehäuse befindliche Ölmenge sind so aufeinander abgestimmt, dass während des Betriebs des Fahrzeugs der Getriebeölspiegel in dem Getriebegehäuse stets auf einem Pegel absinkt, bei dem die Getriebezahnräder nicht in das Getriebeöl eingetaucht sind. Das gattungsgemässe Dokument EP 1 452 778 A2 beschreibt ein automatisiertes Getriebe für Kraftfahrzeuge. Dieses umfasst ein Getriebegehäuse, einen Kraftübertragungsstrang zum Einrichten unterschiedlicher Übersetzungsverhältnisse, der dazu ausgelegt ist, Kraft von einem Getriebeeingang zu einem Getriebeausgang zu übertragen, wobei Kraftübertragungsglieder aus einem Ölsumpf am Boden des Getriebegehäuses geschmiert werden, und eine Hydraulikanordnung, die dazu ausgelegt ist, Schaltgliedern zum Ändern des Übersetzungsverhältnisses des Kraftübertragungsstrangs automatisiert zu betätigen. Innerhalb des Getriebegehäuses ist seitlich neben dem Ölsumpf ein Behälter angeordnet, der als Ölreservoir für die Hydraulikanordnung dient.

DE 100 51 356 A1 betrifft ein Getriebe für eine Hubkolbenbrennkraftmaschine, welches eine Ölsumpf und eine dem Ölsumpf zugeordnete Ölpumpe für einen Hauptölkreislauf aufweist. Dem Ölsumpf ist mindestens ein zusätzlicher Ölvorrat zugeordnet, der mit der Ölpumpe in Wirkverbindung steht.

### Offenbarung der Erfindung

Es werden daher ein Getriebe für ein Kraftfahrzeug und ein Verfahren zum Betrieb des Getriebes vorgeschlagen, welche die Nachteile bekannter Getriebe und Verfahren zum Betrieb eines Getriebes zumindest weitgehend vermeiden.

Das erfindungsgemäße Getriebe umfasst mindestens ein Fluidbeaufschlagungssystem. Unter einem Fluidbeaufschlagungssystem kann ein System verstanden werden, welches ausgestaltet ist, um mindestens ein Element des Getriebes mit Fluid zu beaufschlagen. Unter dem Ausdruck "beaufschlagen" kann beispielsweise eine Versorgung mit Fluid, insbesondere zum Kühlen und/oder zum Schmieren, und/oder zu einer hydraulischen Steuerung, insbesondere zum Aktuieren, verstanden werden.

Bei dem Fluid kann es sich um eine beliebige Flüssigkeit und/oder um ein beliebiges Gas handeln. Bevorzugt kann es sich bei dem Fluid um eine Flüssigkeit handeln. Beispielsweise kann das Fluid mindestens ein Schmiermittel und/oder mindestens ein Fühlmittel umfassen. Besonders bevorzugt kann es sich bei dem Fluid um Öl handeln, beispielsweise um ein Schmieröl und/oder ein Kühlöl.

Das Fluidbeaufschlagungssystem kann mindestens einen hydraulischen Aktuator, beispielsweise mindestens einen Pumpenaktuator, und/oder mindestens eine Kühlölversorgung und/oder mindestens eine Schmierölversorgung umfassen. Das Fluidbeaufschlagungssystem kann mindestens eine Fluidleitung, beispielsweise eine Ölleitung, umfassen. Bei dem Fluidbeaufschlagungssystem kann es sich beispielsweise um ein Hydrauliksystem handeln, umfassend beispielsweise mindestens einen, bevorzugt zwei, Pumpenaktuatoren. Weiterhin kann das Fluidbeaufschlagungssystem mindestens eine Fluidkühlung, beispielsweise zur Kühlung mindestens einer, bevorzugt zweier, Kupplungen, umfassen. Bei dem Pumpenaktuator kann es sich beispielsweise um einen Pumpenaktuator für mindestens eine Kupplung handeln.

Besonders bevorzugt kann es sich bei dem Fluidbeaufschlagungssystem um eine Kombination aus einem Hydrauliksystem zur Aktuierung mindestens einer, bevorzugt von zwei Kupplungen, und/oder einer Kühlung, beispielsweise einer Kühlung für zumindest eine, bevorzugt von zwei, Kupplungen, und/oder einer Schmierung zumindest eines Teils des Getriebes, beispielsweise mindestens eines Zahnradpaares, und /oder einer Kühlung zumindest eines Teils des Getriebes handeln.

Das Fluidbeaufschlagungssystem umfasst mindestens eine Pumpe. Bei der Pumpe kann es sich um eine Vorrichtung handeln, welche eingerichtet ist, um elektrische Energie in mechanische Energie, bevorzugt in hydraulische Energie, umzuwandeln. Die Pumpe kann eingerichtet sein um ein Fluid, insbesondere Öl, mit einem Druck und/oder einem Volumenstrom zu beaufschlagen.

Das Fluidbeaufschlagungssystem kann bevorzugt drei Pumpen umfassen. Beispielsweise kann das Fluidbeaufschlagungssystem eine Pumpe für jeweils einen von zwei Pumpenaktuatoren, insbesondere Kupplungsaktuatoren, und eine Pumpe zur Kühlung der Kupplungen umfassen.

Alternativ hierzu kann das Fluidbeaufschlagungssystem beispielsweise auch nur eine Pumpe umfassen.

Bei der Pumpe kann es sich beispielsweise um eine durch mindestens einen Pumpenmotor, bevorzugt einen Elektromotor, angetriebene Pumpe handeln. Bei dem Elektromotor kann es sich beispielsweise um einen Drehstrom-Elektromotor und/oder einen elektrisch kommutierten Elektromotor handeln, insbesondere um einen bürstenlosen Gleichstrommotor.

In einer weiteren Alternative beinhaltet das Fluidbeaufschlagungssystem keine Pumpe, mittels der Fluid aus dem Fluidsumpf gesaugt wird. Das Getriebe kann in diesem Fall beispielsweise ein manuelles Getriebe sein, dessen Komponenten im Wege der Tauchschmierung geschmiert werden.
Das Fluidbeaufschlagungssystem umfasst mindestens einen Fluidsumpf. Bei dem Fluidsumpf kann es sich beispielsweise um einen Ölsumpf handeln. Der Fluidsumpf kann eine Vorrichtung sein, welche eingerichtet ist, um ein Fluid, insbesondere Öl, aufzunehmen. Der Fluidsumpf kann beispielsweise derart ausgestaltet sein, dass er Fluid derart aufnimmt, dass Zahnräder des Getriebes mit Fluid beaufschlagt werden können, beispielsweise zum Kühlen und/oder zum Schmieren. Bei dem Fluidsumpf kann es sich bevorzugt um einen Getriebesumpf handeln. Der Fluidsumpf kann beispielsweise mindestens einen Behälter und/oder mindestens einen Hohlraum in dem Getriebe umfassen, vorzugsweise in einem unteren Teil eines Getriebes, in welchem sich aufgrund einer Gravitationskraft und/oder einer Zentrifugalkraft und/oder einer Corioliskraft das Fluid, insbesondere das Öl, sammelt, beispielsweise in einem Ruhezustand des Getriebes.

Das Getriebe kann beispielsweise mindestens ein Getriebegehäuse umfassen. Das Getriebegehäuse kann den Fluidsumpf umgreifen.

Bei dem Fluidsumpf kann es sich beispielsweise um eine Senke in dem Getriebegehäuse handeln. Die Senke kann zumindest einen Teil der Zahnräder des Getriebes umfassen.

Der Fluidsumpf kann ein Raum und/oder ein Teilraum des Getriebegehäuses sein. Das Getriebe kann mindestens ein Zahnrad umfassen. Mindestens ein Teil eines Zahnrades kann zumindest teilweise mit dem Fluid des Fluidsumpfes benetzt sein und/oder kann von dem Fluid in dem Fluidsumpf umgeben sein.

Das Fluidbeaufschlagungssystem umfasst mindestens ein Fluidreservoir. Bei dem Fluidreservoir kann es sich um einen Behälter handeln, welcher eingerichtet ist um Fluid, insbesondere Öl, aufzunehmen und/oder abzugeben und/oder zu speichern.

Das Fluidreservoir kann bevorzugt weitgehend getrennt von dem Fluidsumpf ausgestaltet sein. Unter dem Ausdruck "weitgehend getrennt" kann beispielsweise verstanden werden, dass der Fluidsumpf über zumindest eine Verbindung zum Befüllen mit Fluid und/oder zum Leeren des Fluides mit dem Fluidsumpf verbunden sein kann, wobei eine direkte Verbindung zwischen dem Fluidsumpf und dem Fluidreservoir zumindest temporär unterbrochen sein kann.

Bevorzugt kann das Fluidbeaufschlagungssystem genau ein Fluidreservoir umfassen. Alternativ hierzu kann das Fluidbeaufschlagungssystem auch mehrere Fluidreservoire umfassen, beispielsweise zwei Fluidreservoire oder drei Fluidreservoire.

Das Fluidreservoir umfasst mindestens einen ersten Fluidabfluss in den Fluidsumpf. Bei dem ersten Fluidabfluss kann es sich um eine Fluidverbindung zwischen dem Fluidreservoir und dem Fluidsumpf handeln, beispielsweise über mindestens eine Fluidleitung, insbesondere eine Ölleitung. Bei der Fluidleitung kann es sich insbesondere zumindest teilweise um eine Bohrung in einem Gehäuse des Getriebes handeln und/oder um eine Rohrleitung und/oder um einen Abfluss handeln, welcher beispielsweise durch Gehäusewände geformt sein kann.

Durch den ersten Fluidabfluss kann Fluid von dem Fluidreservoir zu dem Fluidsumpf gelangen, beispielsweise aufgrund von im Normalbetrieb des Kraftfahrzeugs wirkenden Gravitationskräften und/oder Zentrifugalkräften und/oder Corioliskräften. Bevorzugt kann durch den ersten Fluidabfluss kein Fluid von dem Fluidsumpf zu dem Fluidreservoir gelangen. Alternativ hierzu kann durch den Fluidabfluss auch Fluid von dem Fluidreservoir in den Fluidsumpf gelangen und/oder Fluid von dem Fluidsumpf in das Fluidreservoir gelangen.

Der erste Fluidabfluss ist abhängig von einer Zustandsgröße steuerbar. Der erste Fluidabfluss kann beispielsweise in einer beliebigen Abhängigkeit zu der Zustandsgröße steuerbar sein. Beispielsweise kann mindestens eine physikalische Ausgabegröße an dem ersten Fluidabfluss abhängig von der Zustandsgröße steuerbar sein. Beispielsweise kann die physikalische Ausgabegröße mindestens eine hydraulische Größe umfassen, insbesondere mindestens einen Druck und/oder mindestens einen Volumenstrom.

Beispielsweise kann es sich bei der Abhängigkeit um eine proportionale Abhängigkeit und/oder um eine invers proportionale Abhängigkeit und/oder um eine exponentielle Abhängigkeit und/oder um eine polynomiale Abhängigkeit handeln. Bei der Abhängigkeit kann es sich auch zumindest teilweise um eine stufenfunktionsförmige Abhängigkeit handeln. Beispielsweise kann ein Schwellwert der Zustandsgröße vorgesehen sein, wobei bei einem Wert der Zustandsgröße unterhalb des Schwellwerts die physikalische Ausgabegröße auf einen ersten Wert geregelt wird und wobei bei einem Wert der Zustandsgröße oberhalb oder gleich dem Schwellwert die physikalische Ausgabegröße auf einen zweiten Wert geregelt wird. Beispielsweise kann bei Unterschreitung des Schwellwerts der Fluidabfluss geschlossen sein oder geschlossen werden und bei Erreichen und/oder Überschreiten des Schwellwerts kann der Fluidabfluss geöffnet sein oder geöffnet werden und somit ein Volumenstrom 0 sein oder ein Volumenstrom maximiert werden.

Bei der Zustandsgröße kann es sich prinzipiell um eine beliebige physikalische Größe und/oder um eine beliebige chemische Größe und/oder um eine beliebige technische Größe handeln. Die Zustandsgröße kann mindestens eine Größe umfassen ausgewählt aus: einer Temperatur; einer Zähigkeit; einem Druck; einem Volumenstrom; einem hydraulischen Widerstand; einer Strömungsgeschwindigkeit; einem Drehmoment. Bei der Zustandsgröße kann es sich bevorzugt um eine Observable handeln. Bei der Zustandsgröße kann es sich beispielsweise um eine Observable an einem beliebigen Punkt des Getriebes handeln.

Bevorzugt kann es sich bei der Zustandsgröße um eine Observable des Fluidbeaufschlagungssystems handeln.

Erfindungsgemäß weist das Getriebe mindestens einen zweiten Fluidabfluss auf, welcher nicht regelbar ist.

Vorteilhafterweise kann der zweite Fluidabfluss eingerichtet sein, um bei einem Ausfall einer Steuerung und/oder bei einem Ausfall einer Regelung des Getriebes und/oder des ersten Fluidabflusses das Fluidreservoir zu entleerten, beispielsweise leer laufen zu lassen. Der zweite Fluidabfluss kann insbesondere derart ausgestaltet sein, dass bei langen Stillstandzeiten des Getriebes das gesamte Fluid des Getriebes, insbesondere das gesamte Fluidvolumen, in den Fluidsumpf zurücklaufen kann und/oder genug Fluid, insbesondere Öl, bei einem Kaltstart zur Verfügung steht.

Das Getriebe kann mindestens eine Kupplung umfassen. Bei der Kupplung kann es sich um eine Vorrichtung handeln, weiche eingerichtet ist um eine Kraftübertragung zwischen mindestens zwei Wellen reversibel zu ermöglichen. Unter dem Ausdruck "reversibel" kann verstanden werden, dass eine Kraftübertragung zwischen den zwei Wellen beliebig häufig ermöglicht und/oder verhindert werden kann, beispielsweise gesteuert durch einen Fahrer und/oder durch eine automatisierte Steuerung.

Bei der Kupplung kann es sich bevorzugt um eine nasse Kupplung handeln. Eine nasse Kupplung kann bevorzugt derart mit Fluid beaufschlagt werden, dass diese durch das Fluid gekühlt wird. Zusätzüch kann die nasse Kupplung durch Fluid aktuiert werden, insbesondere kann die nasse Kupplung hydraulisch aktuiert geöffnet und/oder geschlossen werden, insbesondere derart, dass eine Kraftübertragung zwischen den zwei Wellen ermöglicht oder verhindert wird.

Das Getriebe kann bevorzugt zwei Kupplungen umfassen. Bei dem Getriebe kann es sich bevorzugt um ein Doppelkupplungsgetriebe handeln.

Das Fluidbeaufschlagungssystem kann bevorzugt drei Stränge umfassen.

Das Fluidbeaufschlagungssystem kann beispielsweise jeweils einen Strang für jeweils eine Kupplung zur Aktuierung und je einen Strang oder einen gemeinsamen Strang zur Kühlung der beiden Kupplungen umfassen.

Jeder Strang kann beispielsweise mindestens eine Pumpe umfassen. Beispielsweise kann jeder Strang ein Fluidreservoire umfassen. Bevorzugt kann lediglich ein Strang zur Kühlung der Kupplungen ein Fluidreservoir umfassen. Jeder Strang kann beispielsweise aus dem Fluidsumpf mit Fluid versorgbar sein.

Das Fluidbeaufschlagungssystem kann eingerichtet sein um mindestens eine Kupplung zu kühlen und/oder mindestens eine Kupplung, vorzugsweise zwei Kupplungen, zu aktuieren.

Die Zustandsgröße kann eine Fluidbeaufschlagungsgröße sein. Die Fluidbeaufschlagungsgröße kann eine beliebige physikalische und/oder chemische und/oder technische Größe umfassen.

Die Fluidbeaufschlagungsgröße kann beispielsweise zumindest teilweise durch die Pumpe, insbesondere durch eine Funktionsweise der Pumpe, beeinflusst sein.

Die Fluidbeaufschlagungsgröße kann mindestens eine Größe ausgewählt aus einem Fluiddruck, insbesondere einem Öldruck, beispielsweise einem Kühlöldruck, bevorzugt einem Öldruck einer Kupplungsgröße; einem Fluidvolumenstrom, insbesondere einem Ölvolumenstrom; einer Drehzahl der Pumpe; einer Drehzahl eines Pumpenmotors; einer Drehrichtung der Pumpe; einer Drehrichtung des Pumpenmotors; einem Fluidbedarf, insbesondere einem Ölbedarf, und einem Staudruck, beispielsweise einem Staudruck einer Kupplungskühlölleitung, umfassen.

Bei der Fluidbeaufschlagungsgröße und/oder der Zustandsgröße kann es sich insbesondere um eine Größe handeln, welche beispielsweise zwischen dem Fluidsumpf und der Kupplung, bevorzugt zwischen der Pumpe und der Kupplung und/oder an der Pumpe vorliegt.

Der erste Fluidabfluss kann aktiv und/oder passiv steuerbar sein. Unter dem Ausdruck "aktiv steuerbar" kann beispielsweise verstanden werden, dass die Zustandsgröße und/oder die Fluidbeaufschlagungsgröße zunächst erfasst werden und der Fluidabfluss durch mindestens ein Element geregelt wird. Die aktive Steuerung kann beispielsweise durch mindestens ein Magnetventil durchgeführt werden.

Unter dem Ausdruck "passiv steuerbar" kann beispielsweise verstanden werden, dass die Zustandsgröße und/oder die Fluidbeaufschlagungsgröße zur Steuerung des ersten Fluidabflusses nicht erst erfasst werden sondern direkt zur Regelung beitragen können. Die passive Steuerung kann beispielsweise durch einen Druck in einer Leitung, beispielsweise in einem Kühlölkanal, direkt gesteuert werden.

Der erste Fluidabfluss kann mindestens eine Blende und/oder mindestens eine Drossel und/oder mindestens ein Ventil, insbesondere mindestens ein temperaturabhängiges Ventil und/oder mindestens ein druckabhängiges Ventil und/oder mindestens ein temperatur- und druckabhängiges Ventil, umfassen. Bei der Drossel und/oder dem Ventil und/oder der Blende kann es sich um Elemente handeln, welche eingerichtet sind um mindestens eine physikalische Größe, bevorzugt einen Volumenstrom und/oder einen Druck des Fluides in dem ersten Fluidabfluss, zu beeinflussen.

Bei der Drossel kann es sich beispielsweise um ein Element handeln, welches eingerichtet ist um einen Durchfluss an Fluid zu beschränken und/oder zu beschleunigen. Beispielsweise kann es sich bei einer Drossel um eine Reduzierung handeln, insbesondere um eine Reduzierung einer Durchflussfläche eines Rohres und/oder einer Leitung, beispielsweise einer Ölleitung.

Bei der Blende kann es sich um ein Element handeln, welches eine Durchflussfläche über zumindest einen Streckenabschnitt einer Leitung verringern kann.

Das Ventil kann beispielsweise ein Element zur Absperrung und/oder zur Regelung eines Durchflusses an Fluid sein. Das Ventil kann mindestens ein Verschlussteil umfassen. In einem Ventil kann beispielsweise ein Durchfluss von Fluid reduziert und/oder erhöht und/oder unterbrochen und/oder ermöglicht werden, beispielsweise indem das Verschlussteil über zumindest ein Teil einer Durchflussfläche geschoben wird.

Das Ventil kann beispielsweise einen Durchfluss, insbesondere einen Volumenstrom an Fluid, verändern, insbesondere variabel.

Bei dem temperaturabhängigen Ventil kann es sich insbesondere um ein Ventil handeln, welches sich beispielsweise in Abhängigkeit von einer Temperatur, insbesondere einer Temperatur des Fluides, zumindest teilweise öffnet oder schließt. Bei dem temperaturabhängigen Ventil kann es sich beispielsweise um ein ansteuerbares Ablassventil mit einer temperaturabhängigen Druckschwelle handeln.

Bei dem Ventil kann es sich beispielsweise um ein Sperrventil, insbesondere ein Klappenventil und/oder ein Rückschlagventil, beispielsweise ein entsperrbares Rückschlagventil, und/oder um ein Wegeventil, insbesondere ein Schieberventil und/oder ein Sitzventil, und/oder um ein Magnetventil, insbesondere ein Ventil mit elektromagnetischem Antrieb, beispielsweise ein aktives Magnetventil, handeln.

Das Fluidbeaufschlagungssystem kann mindestens einen zweiten Fluidabfluss umfassen. Der zweite Fluidabfluss kann ein Fluidabfluss von dem Fluidreservoir in den Fluidsumpf sein. Der zweite Fluidabfluss kann eingerichtet sein, um ungesteuert Fluid von dem Fluidreservoir in den Fluidsumpf ablaufen zu lassen.

Der zweite Fluidabfluss und/oder der erste Fluidabfluss kann insbesondere eine Leitung von dem Fluidreservoir zu dem Fluidsumpf umfassen.

Der erste Fluidabfluss und/oder der zweite Fluidabfluss können beispielsweise als Ablauf ausgestaltet sein.

Der zweite Fluidabfluss kann bevorzugt ungesteuert sein. Der zweite Fluidabfluss kann bevorzugt nicht regelbar sein.

Der erste Fluidabfluss und/oder der zweite Fluidabfluss können eingerichtet sein, um beispielsweise nach langen Standzeiten viel Fluid in dem Fluidsumpf bereitzustellen.

Alternativ oder zusätzlich kann auch der erste Fluidabfluss eingerichtet sein um bei einem Ausfall einer Steuerung und/oder bei einem Ausfall einer Regelung des Getriebes und/oder des ersten Fluidabflusses das Fluidreservoir zu entleeren, beispielsweise leer laufen zu lassen.

Der erste Fluidabfluss kann insbesondere derart ausgestaltet sein, dass bei langen Stillstandzeiten des Getriebes das gesamte Fluid des Getriebes, insbesondere das gesamte Fluidvolumen, in den Fluidsumpf zurücklaufen kann und/oder genug Fluid, insbesondere Öl, bei einem Kaltstart zur Verfügung steht.

Beispielsweise können der erste Fluidabfluss und/oder der zweite Fluidabfluss mindestens eine Blende, bevorzugt eine kleine Blende, umfassen.

Die Blende, insbesondere die kleine Blende, kann beispielsweise eine Öffnung mit einer Querschnittsfläche zwischen 100 µm² und 1 cm², bevorzugt zwischen 0,1 mm² und 2 mm², besonders bevorzugt von 0,5 mm² aufweisen.

Der zweite Fluidabfluss kann bevorzugt kein regelndes Element umfassen. Der zweite Fluidabfluss kann beispielsweise ohne ein Ventil ausgestaltet sein.

Alternativ oder zusätzlich kann der zweite Abfluss mindestens eine Drossel und/oder mindestens ein Ventil und/oder mindestens eine Blende umfassen.

Das Getriebe kann mindestens eine Erfassungseinrichtung zur Erfassung der Zustandsgröße, bevorzugt zur Erfassung der Fluidbeaufschlagungsgröße, umfassen. Bei der Erfassungseinrichtung kann es sich prinzipiell um eine beliebige Erfassungseinrichtung handeln, welche eingerichtet ist, um die Zustandsgröße, bevorzugt die Fluidbeaufschlagungsgröße, zu erfassen. Bei der Erfassungseinrichtung kann es sich beispielsweise um mindestens einen Sensor und/oder um mindestens ein Messgerät handeln.

Das Getriebe kann insbesondere mindestens einen Drucksensor, beispielsweise mindestens einen Drucksensor zur Erfassung eines Kühlfluiddrucks, und/oder mindestens einen Drehzahlsensor und/oder mindestens einen Drehrichtungssensor umfassen.

Bei dem Drucksensor kann es sich prinzipiell um eine beliebige Vorrichtung handeln, welche eingerichtet ist um mindestens einen Druck, bevorzugt mindestens einen Kühlfluiddruck, zu erfassen. Bei dem Drucksensor kann es sich beispielsweise um eine Vorrichtung handeln, welche den Piezoelektrischen Effekt ausnutzt um den Druck eines Fluides, beispielsweise von Öl, in ein elektrisches Signal umzuwandeln. Alternativ oder zusätzlich kann der Drucksensor mindestens eine Membran umfassen. Der Drucksensor kann eingerichtet sein um aus einer Änderung eines elektrischen Widerstands an einem Element auf der Membran auf einen Druck des Fluides zu schließen.

Bei dem Drehzahlsensor und/oder dem Drehrichtungssensor kann es sich beispielsweise um eine Vorrichtung handeln, welche eingerichtet ist um mindestens eine Drehzahl und/oder mindestens eine Drehrichtung eines Motors, beispielsweise eines Elektromotors, zu erfassen. Bei dem Drehzahlsensor und/oder dem Drehrichtungssensor kann es sich bevorzugt um eine Vorrichtung handeln, welche eingerichtet ist um eine Pumprichtung der Pumpe und/oder einen Volumenstrom durch die Pumpe zu erfassen.

Alternativ oder zusätzlich kann das Getriebe, insbesondere das Fluidbeaufschlagungssystem, mindestens einen Temperatursensor umfassen. Der Temperatursensor kann eingerichtet sein um mindestens eine Temperatur, bevorzugt mindestens eine Temperatur des Fluides, insbesondere des Öls, zu erfassen. Der Temperatursensor kann eingerichtet sein, um mittels eines Temperaturmodells die Zustandsgröße und/oder die Fluidbeaufschlagungsgröße zu korrigieren, insbesondere hinsichtlich eines Einflusses von Temperaturschwankungen und/oder eines Einflusses einer temperaturabhängigen Zähigkeit des Fluides, insbesondere einer temperaturabhängigen Zähigkeit des Öls.

Der Temperatursensor kann prinzipiell an einer beliebigen Stelle des Fluidbeaufschlagungssystems angeordnet sein, beispielsweise in der Nähe des Ventils des ersten Fluidabflusses.

Das Fluidreservoir kann beispielsweise derart eingerichtet sein, dass verhindert werden kann, dass die Kupplung Luft zieht. Beispielsweise kann die erfindungsgemäße Vorrichtung verhindern, dass die Pumpe Luft zieht. Der erste Fluidabfluss und/oder der zweite Fluidabfluss können derart eingerichtet sein, dass die Pumpe bevorzugt nie Luft zieht.

Das Fluidreservoir kann mindestens eine Öffnung zum Befüllen des Fluidreservoirs umfassen. Bei der Öffnung kann es sich prinzipiell um eine beliebige Öffnung handeln. Beispielsweise kann das Fluidreservoir ein nach oben geöffneter Hohlraum und/oder ein nach oben geöffneter Behälter sein. Unter dem Ausdruck "oben" kann im Rahmen der vorliegenden Erfindung beispielsweise eine Richtung aufgefasst werden, welche im Wesentlichen entgegengesetzt zu auf das Fluid, insbesondere auf das Öl, wirkenden Kräften, insbesondere der Gravitationskraft und/oder Zentrifugalkräften bei normalem Betrieb des Kraftfahrzeugs, ausgerichtet sein kann.

Das Fluidreservoir kann durch Spritzfluid, insbesondere Spritzöl, und/oder durch von mindestens einer Blende abgeleitetes Fluid, insbesondere abgeleitetes Öl, befüllbar sein. Das Fluidreservoir kann insbesondere durch die Öffnung befüllt werden, beispielsweise mit Spritzfluid und/oder mit von mindestens einer Blende abgeleitetem Fluid befüllbar sein. Das Spritzfluid kann Öl sein, welches durch mindestens ein sich drehendes Zahnrad aus dem Fluidsumpf gespritzt und/oder von der Kupplung abgeschleudert wird.

Alternativ oder zusätzlich zu einer Befüllung durch Spritzfluid kann das Fluidreservoir durch von mindestens einer Blende abgeleitetes Fluid befüllbar sein. Bei der Blende kann es sich prinzipiell um eine beliebige Blende handeln, beispielsweise um eine Blende wie oben beschrieben. Beispielsweise kann es sich bei der Blende um eine Blende handeln, welche einer Regelung eines Druckes, beispielsweise eines Pumpendruckes, und/oder eines Volumenstromes dienen kann. Bei der Blende kann es sich um eine Blende handeln, welche beispielsweise in einem Bypass zwischen einer Fluidzuleitung zu der Kupplung und dem Fluidsumpf angeordnet sein kann, insbesondere um einen Leckagefluidstrom, insbesondere einen Lackageölstrom, zu erzeugen.

Das Fluidbeaufschlagungssystem kann mindestens einen Filter umfassen. Bei dem Filter kann es sich um ein beliebiges Element handeln, welches eingerichtet ist, um mit dem Fluid mitgeführte Verunreinigungen und/oder Schwebstoffe zu entfernen und/oder zurückzuhalten. Beispielsweise kann der Filter eingerichtet sein, um Schmutz aus dem Fluid zu filtern.

Der Filter kann beispielsweise zwischen dem Fluidsumpf und der Pumpe und/oder zwischen der Pumpe und der Kupplung und/oder zwischen der Pumpe und dem Radsatz und/oder zwischen dem Fluidreservoir und dem Fluidsumpf und/oder zwischen dem Fluidsumpf und der Öffnung des Fluidreservoirs angeordnet sein.

Beispielsweise kann der Filter vor einer Blende angeordnet sein, um ein Verstopfen der Blende zu Verhindern. Alternativ oder zusätzlich kann der Filter vor der Pumpe angeordnet sein, um einen Verschleiß der Pumpe zu verhindern.

Unter dem Ausdruck "vor" kann im Rahmen der vorliegenden Erfindung eine Richtung entgegengesetzt zu der Fließrichtung des Fluides verstanden werden, beispielsweise bei einem Ansaugen von Fluid aus dem Fluidsumpf zu der Kupplung.

Der Filter kann insbesondere einer Filtration des Fluides dienen. Der Filter kann beispielsweise mindestens ein feines Gitter umfassen, insbesondere ein Gitter aus Metall. Das Gitter kann beispielsweise einen Maschendurchmesser von 2 mm bis 1 µm, bevorzugt von 1 mm bis 10 µm, besonders bevorzugt von 500 µm bis 100 µm aufweisen.

Bei dem Filter kann es sich bevorzugt um einen Pumpenschutz-Ansaugfilter, beispielsweise als Sieb ausgestaltet, mit einer Maschenweite von 150 µm bis 400 µm handeln.

Das Getriebe kann mindestens ein Getriebegehäuse umfassen. Unter dem Getriebegehäuse kann eine Vorrichtung verstanden werden, welche zumindest einen Teil der Elemente des Getriebes zumindest teilweise umfasst, beispielsweise die Kupplung und/oder das Fluidbeaufschlagungssystem und/oder den Radsatz. Das Fluidreservoir kann zumindest teilweise in das Getriebegehäuse integriert sein. Beispielsweise kann das Fluidreservoir zumindest teilweise auch außerhalb des Getriebegehäuses angeordnet sein.

Das Getriebe kann mindestens eine Ansteuerung umfassen. Die Ansteuerung kann über mindestens eine Schnittstelle mit dem Fluidbeaufschlagungssystem, insbesondere mit dem Ventil, verbunden sein. Die Ansteuerung kann beispielsweise eine oder mehrere elektronische Komponenten aufweisen. Die Ansteuerung kann beispielsweise ganz oder teilweise als anwendungsspezifischer integrierter Schaltkreis realisiert sein und/oder kann ganz oder teilweise in eine Motorsteuerung integriert sein. Alternativ oder zusätzlich kann die Ansteuerung ganz oder teilweise in den Radsatz und/oder in das Fluidbeaufschlagungssystem integriert sein.

Die Ansteuerung kann beispielsweise mindestens eine Datenverarbeitungsvorrichtung umfassen. Die Ansteuerung kann ganz oder teilweise in mindestens eine andere Ansteuerung integriert sein. Die Ansteuerung kann beispielsweise durch ein Bordnetz betreibbar sein.

Die Ansteuerung kann mindestens einen Steuerungsausgang umfassen. Bei dem Steuerungsausgang kann es sich um ein Element handeln, welches eingerichtet ist um Informationen, insbesondere Anweisungen von der Ansteuerung, zu mindestens einem Element des Getriebes zu übertragen. Bei dem Steuerungsausgang kann es sich um einen analogen und/oder um einen digitalen Ausgang handeln.

Das Getriebe kann derart ausgestaltet sein, dass der Steuerungsausgang gleichzeitig die Pumpe und den ersten Fluidabfluss steuert.

Bei der Pumpe kann es sich beispielsweise um eine Pumpe handeln, wie in der nachveröffentlichten deutschen Patentanmeldung der Anmelderin der vorliegenden Anmeldung mit der Nummer DE 10 2013 110 400.2 oder in DE 10 2011 122 642 A1 beschrieben.

Die Pumpe kann insbesondere derart ausgestaltet sein, dass sie unabhängig von einer Drehrichtung des Drehstroms das Fluid in die gleiche Richtung pumpt, vorzugsweise von dem Fluidsumpf zu der Kupplung.

Das Fluidbeaufschlagungssystem kann eingerichtet sein, um Fluid aus dem Fluidsumpf zu der Kupplung zu transportieren. Der Filter kann bevorzugt in Strömungsrichtung vor der Pumpe angeordnet sein. In Strömungsrichtung hinter der Pumpe kann mindestens eine Drehdurchführung angeordnet sein. In Strömungsrichtung hinter der Drehdurchführung kann bevorzugt die Kupplung angeordnet sein. Der Filter und/oder die Pumpe und/oder die Drehdurchführung und/oder die Kupplung können zumindest teilweise über mindestens eine Leitung verbunden sein. Bei der Leitung kann es sich beispielsweise um eine Bohrung, insbesondere in dem Getriebegehäuse, handeln und/oder um mindestens eine Rohrleitung. Das Fluidreservoir kann über mindestens eine Leitung, insbesondere mindestens eine Bohrung und/oder mindestens eine Rohrleitung, über den ersten Fluidabfluss und/oder über den zweiten Fluidabfluss mit dem Fluidsumpf zumindest teilweise verbunden, insbesondere fluidisch verbunden, sein.

Das Fluidbeaufschlagungssystem kann zusätzlich mindestens eine Leckageleitung zum Sumpf umfassen, bevorzugt in Strömungsrichtung hinter der Pumpe. Die Leckageleitung kann mindestens eine Blende und/oder mindestens einen Filter umfassen.

In einem weiteren Aspekt der vorliegenden Erfindung wird ein Verfahren zum Betrieb des Getriebes vorgeschlagen. Das Getriebe umfasst mindestens ein Fluidbeaufschlagungssystem, insbesondere ein Fluidbeaufschlagungssystem wie oben beschrieben. Das Fluidbeaufschlagungssystem umfasst die mindestens eine Pumpe. Das Fluidbeaufschlagungssystem umfasst den mindestens einen Fluidsumpf. Das Fluidbeaufschlagungssystem umfasst das mindestens eine Fluidreservoir. Das Fluidreservoir umfasst den mindestens einen ersten Fluidabfluss in den Fluidsumpf. Der erste Fluidabfluss wird abhängig von der Zustandsgröße gesteuert.

Das Verfahren kann bevorzugt zumindest teilweise von der Ansteuerung durchgeführt werden.

Der Fluidabfluss kann bevorzugt abhängig von der Fluidbeaufschlagungsgröße gesteuert werden, beispielsweise aktiv oder passiv.

In dem erfindungsgemäßen Verfahren kann insbesondere ein Teil des Fluides, beispielsweise eines Getriebeöls, in dem Fluidreservoir zurückbehalten werden. Nach längeren Standphasen und/oder bei großem Fluidbedarf, insbesondere bei großem Ölbedarf, z.B. für eine Kühlung der mindestens einen Kupplung, kann Fluid aus dem Fluidreservoir in den Sumpf abgelassen werden, insbesondere durch den ersten Fluidabfluss und/oder durch den zweiten Fluidabfluss.

Beispielsweise kann zumindest ein Teil des Fluides in dem Getriebe in dem Fluidreservoir gespeichert werden. Das Fluidreservoir kann durch aufgefangenes Spritzfluid aus einem Radsatz und/oder aus einer Kupplungseinrichtung, insbesondere aus der Kupplung, des Getriebes befüllt werden.

Das oben beschriebene Getriebe für ein Kraftfahrzeug und das oben beschriebene Verfahren zum Betrieb des Getriebes weisen gegenüber bekannten Vorrichtungen und Verfahren zahlreiche Vorteile auf.

Beispielsweise kann ein Fluidstand, insbesondere der Ölstand in dem Fluidsumpf, an Zustände des Getriebes angepasst werden. Der Fluidstand in dem Fluidsumpf kann zumindest zeitlich begrenzt und/oder reversibel abgesenkt werden. Beispielsweise kann der Fluidstand in dem Fluidsumpf dem Fluidbedarf angepasst werden. Insbesondere kann der Fluidstand in dem Getriebesumpf in einem Normalbetrieb abgesenkt sein. Der Normalbetrieb kann beispielsweise ein Zustand des Getriebes sein, in welchem nicht die maximale Fluidmenge, insbesondere eine maximale Ölmenge, zum Kühlen und/oder zum Aktuieren und/oder zum Schmieren benötigt wird. Während des Normalbetriebs kann das Kraftfahrzeug beispielsweise normale Fahrsituationen durchlaufen.

Der Fluidstand kann beispielsweise in normalen Fahrsituationen abgesenkt werden, insbesondere derart, dass Zahnräder weniger in dem Fluid kämmen. Ein nicht maximaler Fluidstand, insbesondere ein erniedrigter Fluidstand, kann weniger Planschverluste, insbesondere an den Zahnrädern, verursachen.

Um beispielsweise eine Sicherheit einer Versorgung mit Fluid, insbesondere eine Ölversorgung, dennoch zu gewährleisten kann bei einem großen Ölbedarf, wie er beispielsweise zum Kühlen einer Kupplung, insbesondere einer nassen Lamellenkupplung, notwendig sein kann, eine größere Menge an Fluid, insbesondere Öl, zum Ansaugen zur Verfügung stehen, als beispielsweise während des Normalbetriebs.

Bevorzugt kann ein Getriebewirkungsgrad durch ein erfindungsgemäßes Getriebe und/oder durch das erfindungsgemäße Verfahren erhöht werden.

Bei hohem Fluidbedarf, beispielsweise bei einer aktiven Kühlung der Kupplung, insbesondere einer aktiven Kupplungskühlung, kann der Fluidstand in dem Fluidsumpf maximal sein und/oder das gesamte Fluidvolumen zur Verfügung gestellt werden.

Weiterhin kann, insbesondere bei Verwendung einer Pumpe wie in DE 10 2013 110 400.2 beschrieben, das Fluidbeaufschlagungssystem nur durch genau einen Steuerungsausgang der Ansteuerung angesteuert werden. Ein von einem Pumpenansteuerungsausgang separierter Steuerungsausgang für das Ventil ist durch die erfindungsgemäße Vorrichtung und das erfindungsgemäße Verfahren bevorzugt nicht notwendig.

Bevorzugt kann das erfindungsgemäße Getriebe derart ausgestaltet sein, dass das Fluidreservoir bei einem Ausfall der Ansteuerung leer laufen kann. Hierdurch können Funktion und/oder Sicherheit positiv beeinflusst werden.

Das erfindungsgemäße Getriebe kann bevorzugt ein Getriebe mit nasser Kupplung sein. Weiterhin kann das Getriebe bevorzugt ein Getriebe mit mindestens einer bedarfsgerechten Kühlfluidversorgung mittels Elektromotor sein.

Bevorzugt beinhaltet das erfindungsgemäße Getriebe folglich neben dem Fluidsumpf ein zusätzliches Fluidreservoir. Das Fluidreservoir wird vorzugsweise mit Spritzfluid befüllt. Das Spritzfluid kann beispielsweise durch Schleuderwirkung in Umlauf gebracht werden, beispielsweise von einem Radsatz oder von einer Kupplung kommend. Das Fluidreservoir ist vorzugsweise nach oben hin offen. Alternativ oder zusätzlich ist das Fluidreservoir vorzugsweise mit einer Fluidrinne verbunden, derart, dass eine Zufuhr von Spritzfluid mittels Schwerkraft möglich ist. Generell ist eine zusätzliche zweite, vorzugsweise direkte Zufuhr von Fluid in das Fluidreservoir über eine Pumpe denkbar, die vorzugsweise speziell für diesen Zweck vorgesehen sein kann. Bei dieser Ausführungsform ist es gegebenenfalls möglich, das Fluidreservoir ohne Nutzung von rotierenden Teilen, und eventuell über eine Blende, schnell zu befüllen, um das Niveau des Fluidsumpfes schnell abzusenken.

Der erste Fluidabfluss kann beispielsweise zwei Stellungen beinhalten, wobei der erste Fluidabfluss beispielsweise über ein Ventil oder dergleichen mit dem Fluidsumpf verbunden ist. Ein zweiter Fluidabfluss ist dabei vorzugsweise so ausgebildet, dass Fluid aus dem Fluidreservoir aufgrund von Schwerkraft abfließen kann. In einer Stellung erfolgt der Abfluss dabei vorzugsweise über eine gewisse Leckage (nach der Art einer Blende). Beispielsweise kann ein Ventil, das das Fluidreservoir und den Fluidsumpf verbindet, in einer Geschlossenstellung nicht vollständig schließbar sein, beispielsweise mit einem Klappenspalt mit Anschlag ausgebildet sein. In der anderen Stellung ist eine größere oder maximale Abflussmenge ermöglicht. Eine der Stellungen kann dabei eingerichtet werden, ohne dass von außen Energie zugeführt werden muss, wie beispielsweise bei einem Magnetventil. Die andere Stellung kann dabei beispielsweise dann eingerichtet werden, wenn dem Ventil Energie zugeführt wird. Die Energiezufuhr kann beispielsweise eine Bestromung eines magnetisch oder sonst wie steuerbaren Ventils sein. Die Bestromung kann beispielsweise von einer Ansteuerung aus erfolgen, die das Ventil in Abhängigkeit von einem beliebigen Ereignis oder in Abhängigkeit von einer beliebigen Zustandsgröße bestromt.

Mit anderen Worten kann es sich bei einem zweiten Fluidabfluss beispielsweise um eine in einem Ventilkörper angebrachte Bohrung oder Blende handeln, derart, dass das Ventil nie ganz dicht schließen kann. Der Ventilkörper kann beispielsweise eine Klappe oder ein Kolben sein.

Das Ventil, das das Fluidreservoir und den Fluidsumpf verbindet, ist vorzugsweise als "normally closed" ausgeführt, befindet sich folglich dann, wenn es nicht mit Fremdenergie betätigt wird, in einem geschlossenen Zustand (der, wie oben erwähnt, nicht vollständig schließend ausgebildet sein kann).

Bei dieser Ausführungsform verbraucht ein solches Ventil im Normalbetrieb keine Energie. Der Normalbetrieb ist beispielsweise ein Betriebszustand, bei dem ein Antriebsmotor des Kraftfahrzeuges eingeschaltet ist, das Getriebe betriebswarm ist, das Fluidreservoir gefüllt ist und/oder das Niveau des Fluidsumpfes aus energetischen Gründen abgesenkt ist, um Plantschverluste zu vermeiden.
Wenn das Kraftfahrzeug außer Betrieb gesetzt wird, beispielsweise der Antriebsmotor abgestellt wird, kann sich das Reservoir vorzugsweise dennoch wieder entleeren, und zwar über den zweiten Fluidabfluss, der beispielsweise über die Bohrung oder Blende in dem Ventilkörper ausgebildet sein kann.

Wenn das das Fluidreservoir und den Fluidsumpf verbindende Ventil mit Fremdenergie versorgt wird, kann das Ventil in einen geöffneten Zustand versetzt werden, so dass eine größere Menge aus dem Fluidreservoir abgelassen werden kann, als es durch die voreingestellte Leckage eines zweiten Fluidabflusses möglich wäre.

Anstelle des oben beschriebenen Ventils, das nach der Art "normally closed" vorgespannt ist, kann das Ventil auch als "normally open" ausgebildet sein, was jedoch energetisch etwas aufwändiger sein könnte.

Ein Ereignis bzw. eine Zustandsgröße zur Betätigung des Ventils bzw. des ersten Fluidabflusses kann beispielsweis eine Temperatur, ein (Betätigungs-)-Druck, eine Kühlfluidanforderung bzw. ein Kühlfluiddruck, eine Gangschaltanforderung oder ein sonstiger Fahrzustand (Boosten oder Ähnliches) sein, oder eine Kombination hiervon. Der Abfluss kann durch ein einfaches ON/OFF-Ventil realisiert werden, das vorzugsweise gepulst ist, d.h. quasi stufenlos regelbar ist. Ferner kann der Abfluss durch ein stufenloses Ventil gebildet sei, das unendlich viele Stellungen beinhaltet.

In wenigstens einem Betriebszustand ist die anfallende Spritzfluidmenge größer als die von einem zweiten Fluidabfluss bereitgestellte Leckage. Hierdurch kann das Fluidreservoir in diesem Betriebszustand sicher gefüllt werden. In einer weiteren bevorzugten Variante ist die Abflussmenge dann, wenn der erste Fluidabfluss geöffnet ist, größer als die anfallende Spritzfluidmenge, so dass das Fluidreservoir sicher entleert werden kann. Die "Höhen" des ersten und des zweiten Fluidabflusses können identisch sein, können jedoch auch verschieden sein. Beispielsweise könnte der zweite Fluidabfluss höher angeordnet werden als der erste Fluidabfluss. In diesem Fall kann das Fluidreservoir erst durch Öffnen des ersten Fluidabflusses auf ein niedrigeres Niveau gebracht werden oder sogar vollständig entleert werden. Alternativ ist es jedoch auch möglich, den zweiten Fluidabfluss niedriger anzuordnen als den ersten Fluidabfluss, so dass unabhängig von der Stellung des ersten Fluidabflusses immer eine Leckage über den zweiten Fluidabfluss möglich ist.

Der erste Fluidabfluss ist abhängig von einer Zustandsgröße steuerbar. Der Begriff der Steuerung beinhaltet vorzugsweise eine rückkopplungsfreie Steuerung oder eine Steuerung mit Rückkopplung, die auch als Regelung bezeichnet werden kann. Die Steuerung kann folglich aktiv oder passiv sein.

Vorzugsweise wird das Fluidreservoir ausschließlich passiv durch Spritzfluid befüllt.

Der Vorgang des Öffnens des ersten Fluidabflusses zum Zwecke des Ablassens von Fluid aus dem Fluidreservoir dient vorzugsweise nicht zur Schmierung von Zahnrädern des Getriebes, sondern dient vorzugsweise dazu, im Fluidsumpf ein hinreichendes Niveau bereitzustellen, so dass eine Kühlfluidpumpe, vorzugsweise für eine nasslaufende Reibkupplung, nicht leerlaufen kann, sondern immer hinreichend Fluid von dieser Kühlfluidpumpe angesaugt werden kann.

Mit anderen Worten kann das erfindungsgemäße Verfahren dazu eingerichtet werden, um das Niveau des Fluidsumpfes durch Steuerung des ersten Fluidabflusses auf einem solchen Niveau zu halten, dass eine Kühlfluidpumpe in Betriebszuständen, bei denen eine Kühlung einer Komponenten wie einer Reibkupplung notwendig ist, immer Fluid aus dem Fluidsumpf ansaugen kann.

Die Steuerung des ersten Fluidabflusses erfolgt folglich vorzugsweise aufgrund des Fluidbedarfes einer solchen Kühlfluidpumpe. Die Zustandsgröße, mittels der der erste Fluidabfluss steuerbar sein kann, kann folglich auch in eine Reibkupplung eingebrachte Reibenergie sein, die sich aus der Fahrsituation und der jeweiligen Getriebefunktion ergibt. Aus der Reibenergie ergibt sich wiederum der Kühlbedarf und folglich der von der Kühlfluidpumpe anzusaugende Volumenstrom, der durch Steuerung des ersten Fluidabflusses vorzugsweise ausgeglichen wird.

Das Öffnen des ersten Fluidabflusses erfolgt jedoch nicht zwangsweise in Abhängigkeit von der Funktion der Kühlfluidpumpe. Denn eine solche Kühlfluidpumpe kann vorzugsweise mittels eines eigenen Elektromotors stufenlos bei verschiedenen Drehzahlen betrieben werden, und zwar abhängig vom vorliegenden Kühlungsbedarf.

Die Kühlfluidpumpe wird in einer Ausführungsform als reversibel bzw. in ihrer Pumprichtung umkehrbare Pumpe ausgeführt, wie es beispielsweise in dem Dokument DE 102013110400 beschrieben ist. Hierbei kann in einer Umkehrstellung ein Anteil des geförderten Fluid zu einem hydraulischen Steuerventil geleitet werden, das das Fluidreservoir mit dem Pumpensumpf verbindet. Das Steuerventil kann in diesem Fall hydraulisch betätigt sein. Die vorstehend genannten und die nachstehend noch zu erläuternden Merkmale sind nicht nur in der jeweils angegebenen Kombination, sondern auch in anderen Kombinationen oder in Alleinstellung verwendbar, ohne den Rahmen der vorliegenden Erfindung zu verlassen.

Ausführungsformen der Erfindung sind in den Figuren beispielhaft dargestellt und werden in der Beschreibung der Figuren näher erläutert. Es zeigen:
- Fig. 1: Schematische Darstellung eines ersten Ausführungsbeispiels eines erfindungsgemäßen Getriebes;
- Fig. 2: Schematische Teildarstellung eines zweiten Ausführungsbeispiels eines erfindungsgemäßen Getriebes;
- Fig.3: Schematische Teildarstellung eines dritten Ausführungsbeispiels eines erfindungsgemäßen Getriebes;
- Fig. 4: Schematische Teildarstellung eines vierten Ausführungsbeispiels eines erfindungsgemäßen Getriebes;
- Fig. 5: Schematische Teildarstellung eines fünften Ausführungsbeispiels eines erfindungsgemäßen Getriebes;
- Fig. 6: Darstellung eines Fluid-Zähigkeitsverlaufs zu einem Temperaturmodell;
- Fig. 7: Schematische Darstellung einer Innenzahnradpumpe mit einem Umkehrring in einer ersten Drehposition; und
- Fig. 8: Schematische Darstellung einer Innenzahnradpumpe mit einem Umkehrring in einer zweiten Drehposition.

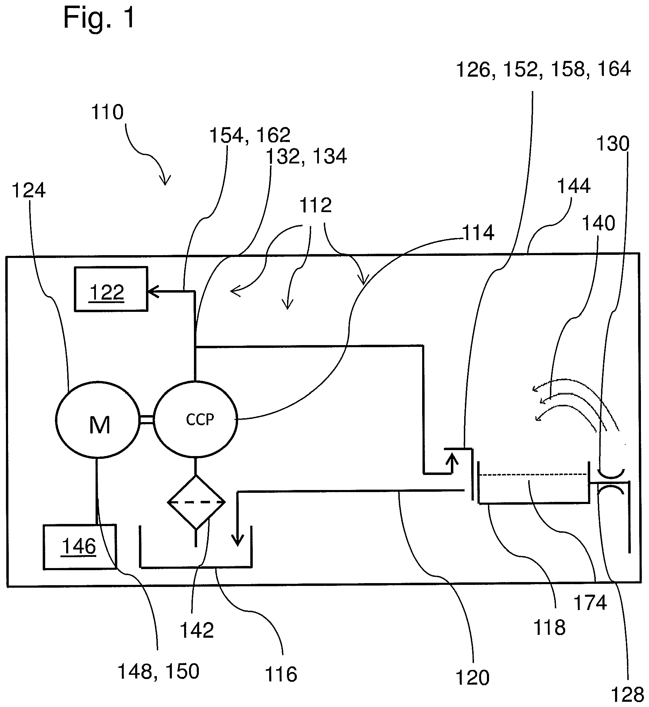

In Figur 1 ist ein erstes Ausführungsbeispiel eines erfindungsgemäßen Getriebes 110 dargestellt.

Das Getriebe 110 umfasst mindestens ein Fluidbeaufschlagungssystem 112. Das Fluidbeaufschlagungssystem 112 umfasst mindestens eine Pumpe 114.

Das Fluidbeaufschlagungssystem 112 umfasst mindestens einen Fluidsumpf 116. Das Fluidbeaufschlagungssystem 112 umfasst mindestens ein Fluidreservoir 118. Das Fluidreservoir 118 umfasst mindestens einen ersten Fluidabfluss 120 in den Fluidsumpf 116. Der erste Fluidabfluss 120 ist abhängig von einer Zustandsgröße steuerbar.

Bei dem Fluidsumpf 116 kann es sich beispielsweise um einen Getriebeölsumpf handeln.

Das Fluidreservoir 118 kann insbesondere eingerichtet sein um zumindest einen Teil eines Volumens an Fluid 174 in dem Fluidreservoir 118 zu speichern. Der Fluidsumpf 116 kann eingerichtet sein um zumindest einen weiteren Teil des Volumens an Fluid 174 zu speichern und/oder zu umfassen.

Bei dem Fluidreservoir 118 kann es sich beispielsweise um mindestens einen Behälter handeln.

Das Getriebe 110 kann mindestens eine Kupplung 122 umfassen. Bevorzugt kann das Getriebe 110 mindestens zwei Kupplungen 122 umfassen. Bei der Pumpe 114 kann es sich beispielsweise um eine "clutch cooling pump" (CCP) handeln, insbesondere um eine Pumpe 114 zur Kühlung mindestens einer Kupplung 122.

Alternativ oder zusätzlich kann es sich bei der Pumpe 114 auch um eine Pumpe 114 zur Aktuierung der Kupplung 122 handeln. Besonders bevorzugt kann das Getriebe 110 eine Pumpe 114 zur Kupplungskühlung umfassen, und zusätzlich bevorzugt zwei Pumpen 114 zur Aktuierung von jeweils einer von zwei Kupplungen 122.

Die Zustandsgröße kann eine Fluidbeaufschlagungsgröße sein. Die Fluidbeaufschlagungsgröße kann mindestens eine Größe ausgewählt aus einem Fluiddruck; einem Fluidvolumenstrom; einer Drehzahl der Pumpe 114; einer Drehzahl des Pumpenmotors 124; einer Drehrichtung der Pumpe 114; einer Drehrichtung des Pumpenmotors 124; einem Fluidbedarf und einem Staudruck umfassen. Der erste Fluidabfluss 120 kann aktiv und/oder passiv steuerbar sein.

Beispielsweise kann der erste Fluidabfluss 120 aktiv, insbesondere durch ein Magnetventil, gesteuert werden. Alternativ oder zusätzlich kann der erste Fluidabfluss 120 passiv, insbesondere durch einen Druck in einem Kühlfluidkanal, gesteuert werden.

Der erste Fluidabfluss 120 kann mindestens eine Blende 130 und/oder mindestens eine Drossel und/oder mindestens ein Ventil 126, insbesondere mindestens ein temperaturabhängiges Ventil und/oder mindestens ein druckabhängiges Ventil und/oder mindestens ein temperatur- und druckabhängiges Ventil, umfassen.
Bei der Blende 130 kann es sich im einfachsten Falle lediglich um mindestens eine Öffnung, beispielsweise mindestens eine Rohrblende und/oder mindestens eine Lochblende, mit einem hydraulischen Durchmesser handeln. Die Blende 130 kann derart ausgestaltet sein, dass Fluid 174 innerhalb eines Zeitintervalls in den Fluidsumpf 116 abgelassen werden kann und/oder abläuft. Die Öffnung, insbesondere eine Größe einer Querschnittsfläche der Öffnung, kann beispielsweise steuerbar ausgestaltet sein.

Ein Kriterium für eine Ansteuerung der Öffnung kann beispielsweise ein Bedarf an Kühlöl in dem Fluidsumpf 116 und/oder ein Fluidniveau in dem Getriebe 110 sein.

Fluid 174 kann, bevorzugt abhängig von einem Kühlfluiddruck einer Kupplungskühlung, beispielsweise gesteuert in den Fluidsumpf 116 abgelassen werden.

Das Fluidbeaufschlagungssystem 112 kann mindestens einen zweiten Fluidabfluss 128 umfassen. Der zweite Fluidabfluss 128 kann bevorzugt nicht regelbar sein. Der zweite Fluidabfluss 128 kann mindestens eine Blende 130 umfassen. Insbesondere kann der zweite Fluidabfluss 128 ein blendengesteuerter Abfluss sein, beispielsweise um bei langen Standzeiten sämtliches Fluid 174 zum Starten in dem Fluidsumpf 116 bereitzustellen.

Das Getriebe 110 kann mindestens eine Erfassungseinrichtung 132 zur Erfassung der Zustandsgröße umfassen, insbesondere mindestens einen Drucksensor 134 und/oder mindestens einen Drehzahlsensor 136 und/oder mindestens einen Drehrichtungssensor 138.

Beispielsweise kann die Erfassungseinrichtung 132 eingerichtet sein, um, beispielsweise bei einer aktiven Ansteuerung, einen Druck des Kühlfluides zu messen und/oder direkt oder indirekt zu erfassen. Dieser Druck des Kühlfluides kann beispielsweise zu einer Regelung des ersten Fluidabflusses 120 verwendet werden.

Das Fluidreservoir 118 kann durch Spritzfluid 140 und/oder durch von mindestens einer Blende abgeleitetes Fluid 174 befüllbar sein. Das Fluidbeaufschlagungssystem 112 kann mindestens einen Filter 142 umfassen. Das Getriebe 110 kann mindestens ein Getriebegehäuse 144 umfassen. Das Fluidreservoir 118 kann zumindest teilweise in das Getriebegehäuse 144 integriert sein.

Alternativ hierzu kann das Fluidreservoir 118 zumindest teilweise außerhalb des Getriebegehäuses 144 angeordnet sein.

Beispielsweise kann das Fluidreservoir 118 innerhalb des Getriebegehäuses 144 angeordnet sein. Alternativ hierzu kann das Fluidreservoir 118 außerhalb des Getriebegehäuses 144 angeordnet sein.

Beispielsweise kann das Fluidreservoir 118 ein Behälter sein, in welchem zumindest ein Teil des Fluides 174 innerhalb oder außerhalb des Getriebegehäuses 144 zwischengelagert werden kann und abhängig von einem Kühlfluiddruck einer Kupplungskühlung gesteuert in den Fluidsumpf 116 abgelassen werden kann.

Das Getriebe 110 kann mindestens eine Ansteuerung 146 umfassen. Die Ansteuerung 146 kann über mindestens eine Schnittstelle 148 mit dem Fluidbeaufschlagungssystem 112, insbesondere mit dem Ventil 126, verbunden sein.

Die Ansteuerung 146 kann mindestens einen Steuerungsausgang 150 umfassen. Das Getriebe 110 kann derart ausgestaltet sein, dass der Steuerungsausgang 150 gleichzeitig die Pumpe 114 und den ersten Fluidabfluss 120, beispielsweise das Ventil 126, steuert.

Das Getriebe 110 und/oder das Fluidbeaufschlagungssystem 112 kann insbesondere derart ausgestaltet sein, dass bei einem Ausfall der Ansteuerung 146 das Fluidreservoir 118 leer läuft. Beispielsweise kann die Blende 130 des zweiten Fluidabflusses 128 stets zumindest teilweise geöffnet sein und/oder die Blende 130 des ersten Fluidabflusses 120 und/oder die Blende 130 des zweiten Fluidabflusses 128 kann bei Ausfall zumindest teilweise geöffnet werden, bevorzugt ohne aktive Ansteuerung.

Um eine optimale Funktion bei unterschiedlichen Temperaturen und/oder unterschiedlichen Viskositäten des Fluides 174 zu erzielen kann beispielsweise ein Temperaturmodell zu Hilfe genommen werden. Beispielsweise kann die Ansteuerung 146 ein Temperaturmodell umfassen.

Figur 1 zeigt insbesondere ein Ausführungsbeispiel der erfindungsgemäßen Vorrichtung, bei welchem das Ventil 126 bevorzugt ein Wegeventil 152 und/oder ein Klappenventil sein kann, besonders bevorzugt ein ansteuerbares Wegeventil 152. Das Wegeventil 152 kann insbesondere derart ausgestaltet sein, dass das Wegeventil 152 bei hohem Staudruck in einer Kupplungskühlölleitung 154, insbesondere bei einem großen Kupplungskühlölvolumenstrom, geöffnet wird, insbesondere derart, dass in dem Fluidreservoir 118 gespeichertes Volumen an Öl aus dem Fluidreservoir 118 in den Fluidsumpf 116 abgelassen werden kann und/oder abläuft und dort beispielsweise für die Pumpe, welche bevorzugt als Kühlölpumpe ausgestaltet sein kann, möglichst schnell zur Verfügung stehen kann.

Figur 1 zeigt insbesondere eine Prinzipdarstellung eines ansteuerbaren Fluidreservoirs 118.

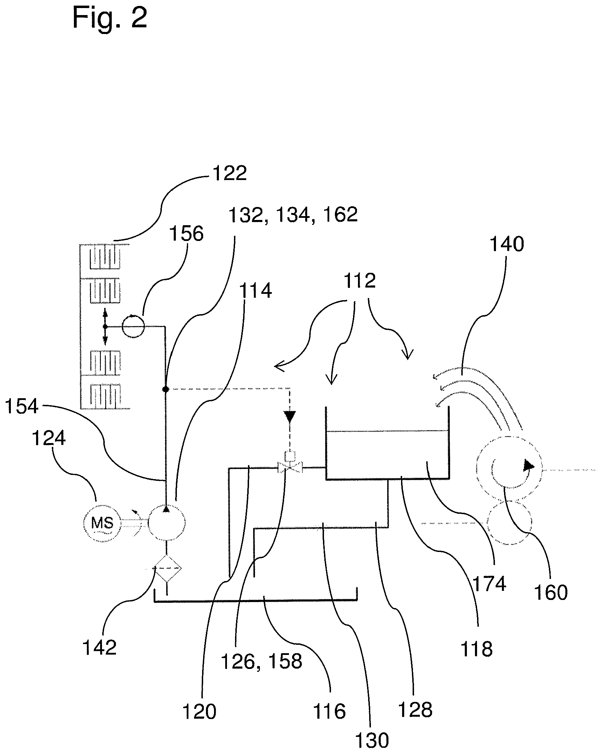

Figur 2 zeigt eine schematische Teildarstellung eines zweiten Ausführungsbeispiels eines erfindungsgemäßen Getriebes 110. Das zweite Ausführungsbeispiel eines erfindungsgemäßen Getriebes 110 kann zumindest teilweise wie das erste Ausführungsbeispiel ausgestaltet sein.

Das in Figur 2 dargestellte Ausführungsbeispiel kann insbesondere mindestens einen elektrisch kommutierten Elektromotor aufweisen, welcher eingerichtet ist um mit der Pumpe 114 Fluid 174 aus dem Fluidsumpf 116 über den Filter 142 und einer Drehdurchführung 156 zu der Kupplung zu pumpen, insbesondere zum Kühlen der Kupplung 122, alternativ oder zusätzlich aber auch zum Aktuieren der Kupplung 122.

Bei dem Ventil 126 kann es sich insbesondere um ein ansteuerbares Ventil 158 handeln. Das Fluidreservoir 118 kann in diesem Ausführungsbeispiel durch Spritzfluid 140 befüllbar sein. Beispielsweise kann das Fluidreservoir 118 durch Spritzfluid, welches durch mindestens einen Zahnradsatz 160 und/oder durch die Kupplung 122 generiert werden kann, befüllbar sein..Der Filter 142 kann insbesondere zu einer Filtration des Fluides 174 dienen.

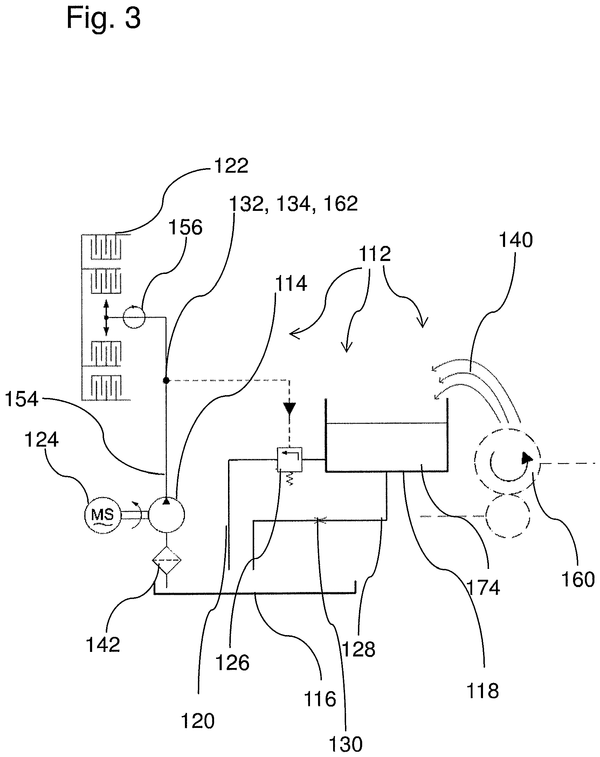

Figur 3 zeigt eine schematische Teildarstellung, insbesondere ein hydraulisches Schema, eines dritten Ausführungsbeispiels eines erfindungsgemäßen Getriebes 110, insbesondere eines ansteuerbaren Fluidreservoirs 118 des erfindungsgemäßen Getriebes 110. Das dritte Ausführungsbeispiel des erfindungsgemäßen Getriebes 110 kann zumindest teilweise wie das erste Ausführungsbeispiel des erfindungsgemäßen Getriebes 110 und/oder wie das zweite Ausführungsbeispiel des erfindungsgemäßen Getriebes 110 ausgestaltet sein.

Ein Druck Δp in einer Versorgungsleitung zu der Kupplung 162 kann üblicherweise durch einen hydraulischen Widerstand Rᵥ der nachfolgenden Bauteile, beispielsweise durch den hydraulischen Widerstand der Drehdurchführung 156 und/oder des Leitungsabschnitts bis zu der Kupplung 122, bestimmt sein, beispielsweise durch die Beziehung Δp = Rᵥ * Iᵥ, wobei Iᵥ ein Volumenstrom ist.

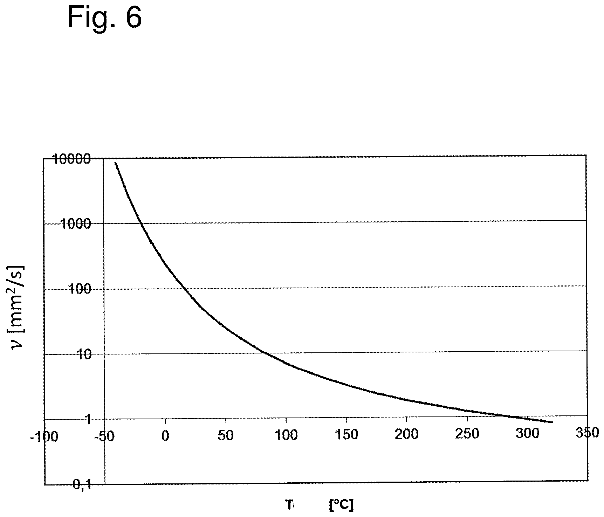

Der hydraulische Widerstand Rᵥ kann von mindestens zwei Betriebsparametern abhängen, beispielsweise von dem Volumenstrom Iᵥ, insbesondere von dem Volumenstrom durch nachfolgende Bauteile, wie beispielsweise von dem Kupplungskühlfluid-Volumenstrom, und der Viskosität des Fluides 174, insbesondere des Getriebefluids. Die Viskosität kann üblicherweise abhängig von der Temperatur sein, wie exemplarisch in Figur 6 dargestellt. Figur 6 zeigt insbesondere einen typischen Verlauf einer kinematischen Viskosität *v* in mm²/s eines Getriebefluids in Abhängigkeit von einer Temperatur T in °C.

Wenn beispielsweise das Ventil 126, insbesondere ein entsperrbares Ventil, auf einen festen Druck, insbesondere einen Druckwert, beispielsweise einen Schwellwert für einen Druck und/oder ein Öffnungsdruck, eingestellt wäre, könnte dieser Öffnungsdruck, bei kaltem Fluid 174 schon bei einem niedrigeren Volumenstrom, insbesondere einem niedrigeren Fördervolumenstrom erreicht werden als bei warmem Fluid 174. Bei sehr niedriger kinematischer Viskosität, insbesondere bei niedriger Ölviskosität, beispielsweise durch eine hohe Temperatur, könnte der Öffnungsdruck eventuell gar nicht mehr erreicht werden.

Diese Problematik kann beispielsweise zumindest teilweise gelöst oder abgeschwächt werden, indem beispielsweise das Ventil 126 ein temperaturabhängiges Ventil 164 sein kann und/oder mindestens ein Temperaturmodell verwendet wird und/oder indem das Ventil 126 über eine elektrische Betätigung ausgelöst werden kann.

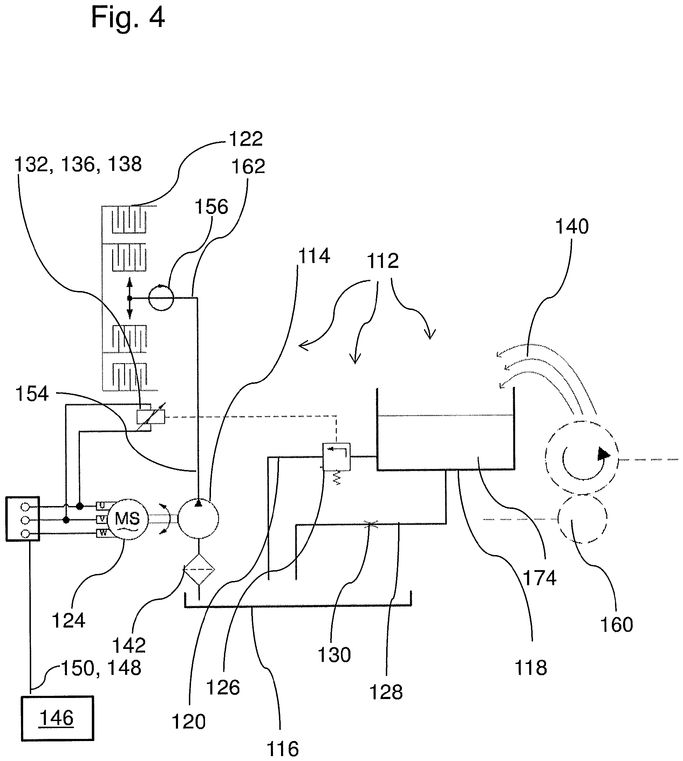

Figur 4 zeigt eine schematische Teildarstellung eines vierten Ausführungsbeispiels eines erfindungsgemäßen Getriebes 110. Das vierte Ausführungsbeispiel eines erfindungsgemäßen Getriebes 110 kann zumindest teilweise wie die anderen Ausführungsbeispiele, insbesondere wie das erste Ausführungsbeispiel, ausgestaltet sein.

Das vierte Ausführungsbeispiel kann insbesondere ein über eine elektrische Betätigung auslösbares Ventil umfassen. Das vierte Ausführungsbeispiel, wie in Figur 4 dargestellt, kann insbesondere ein ansteuerbares Ventil 158, beispielsweise ein ansteuerbares Ablassventil, insbesondere mit einer elektrischen Betätigung und mindestens eine Erfassungseinrichtung 132 umfassen. Das Ventil 126 kann bevorzugt durch eine Auswertung der Funktionsweise des Motors, bevorzugt des Elektromotors, mittels der Erfassungseinrichtung 132 betätigbar sein.

Das Ventil 126, insbesondere das Ablassventil, kann insbesondere indirekt auslösbar sein, insbesondere über die elektrische Betätigung. Das Ventil 126 und/oder der erste Fluidabfluss 120 können insbesondere durch Auswertung der Drehzahl der Pumpe 114 und/oder des Motors, insbesondere des elektrischen Pumpenmotors 124, und/oder durch Auswertung der Drehrichtung der Pumpe 114 und/oder des Motors, insbesondere des elektrischen Pumpenmotors 124, ansteuerbar sein.

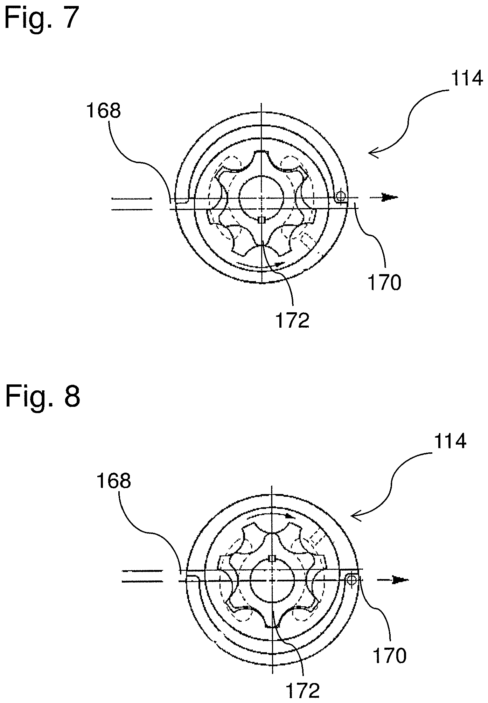

Die Pumpe 114 kann insbesondere mindestens einen Umkehrring 166, wie in den Figuren 7 und 8 dargestellt, umfassen. Die Pumpe 114 kann mindestens eine erste Öffnung 168 und mindestens eine zweite Öffnung 170 umfassen. Die erste Öffnung 168 kann bevorzugt eine Ansaugöffnung sein. Die zweite Öffnung 170 kann bevorzugt eine Ausströmöffnung sein. Die Pumpe 114, insbesondere eine elektromagnetisch angetriebene Kühlölpumpe, kann, bevorzugt bei Verwendung einer Auswertung der Drehrichtung der Pumpe 114, mindestens einen Pumpenradsatz 172 umfassen.

Die Pumpe 114, insbesondere der Pumpenradsatz 172, kann derart ausgestaltet sein, dass eine Pumpfunktion, insbesondere von dem Fluidsumpf 116 zu der Kupplung 122, auch bei wechselnder Drehrichtung der Pumpe, insbesondere Antriebs-Drehrichtung, des Elektromotors erhalten bleiben kann, dass sich eine Richtung eines Fluidstroms also bevorzugt nicht umkehrt, wenn die Drehrichtung der Pumpe wechselt.

Bei der Pumpe 114 kann es sich insbesondere um eine Pumpe 114 handeln, wie in der nachveröffentlichten deutschen Patentanmeldung der Anmelderin der vorliegenden Anmeldung mit der Nummer DE 10 2013 110 400.2 oder in DE 10 2011 122 642 A1 beschrieben. Der Umkehrring 166 kann insbesondere derart ausgestaltet sein, dass die Pumprichtung auch bei wechselnder Drehrichtung der Pumpe 114, insbesondere wechselnder Antriebs-Drehrichtung, beibehalten werden kann.

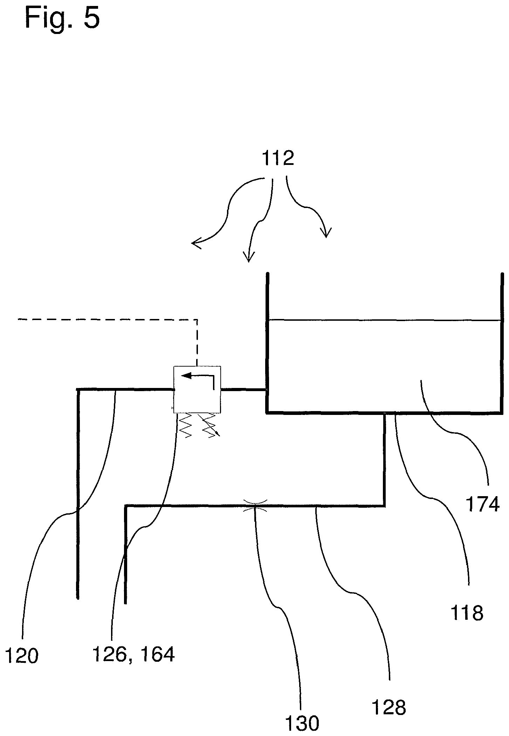

Figur 5 zeigt eine schematische Teildarstellung eines fünften Ausführungsbeispiels eines erfindungsgemäßen Getriebes 110. Das fünfte Ausführungsbeispiel eines erfindungsgemäßen Getriebes 110 kann zumindest teilweise wie die anderen Ausführungsbeispiele ausgestaltet sein. Das Ventil 126 kann beispielsweise mindestens ein temperaturabhängiges Element aufweisen, beispielsweise mindestens ein Element mit einer temperaturabhängigen Federkonstante, insbesondere um eine Anpassung eines Drucks zum Öffnen des Ventils 126, beispielsweise einem Öffnungsdruck, an eine temperaturabhängige Viskosität des Fluides 174, insbesondere des Kühlöls, zu erlauben. Das Element mit einer temperaturabhängigen Federkonstante kann beispielsweise mindestens eine Bimetallfeder umfassen. Das Ventil 126 kann beispielsweise mindestens eine Bimetallfeder alternativ oder zusätzlich zu einer normalen, im Wesentlichen temperaturunabhängigen Feder, aufweisen. Bei dem Ventil 126 kann es sich beispielsweise um ein Thermostatventil handeln und/oder das Ventil 126 kann mindestens ein Thermostatventil umfassen. Das fünfte Ausführungsbeispiel kann als Ventil 126 insbesondere ein temperaturabhängiges Ventil 164 umfassen. Bei dem temperaturabhängigen Ventil 126 kann es sich beispielsweise um ein ansteuerbares Ablassventil mit einer temperaturabhängigen Druckschwelle handeln.

In einem weiteren Aspekt der vorliegenden Erfindung wird ein Verfahren zum Betrieb des erfindungsgemäßen Getriebes 110, wie oben beschrieben, vorgeschlagen. Das Getriebe 110 umfasst mindestens ein Fluidbeaufschlagungssystem 112. Das Fluidbeaufschlagungssystem 112 umfasst mindestens eine Pumpe 114. Das Fluidbeaufschlagungssystem 112 umfasst mindestens einen Fluidsumpf 116. Das Fluidbeaufschlagungssystem 112 umfasst mindestens ein Fluidreservoir 118. Das Fluidreservoir 118 umfasst mindestens einen ersten Fluidabfluss 120 in den Fluidsumpf 116. Der erste Fluidabfluss 120 wird abhängig von einer Zustandsgröße gesteuert.

Das Getriebe 110 kann mindestens eine Ansteuerung 146 umfassen. Die Ansteuerung 146 kann derart ausgestaltet sein, um das erfindungsgemäße Verfahren durchzuführen. Das Verfahren kann beispielsweise zumindest teilweise von der Ansteuerung 146 ausgeführt werden.

**Bezugszeichenliste**

| | | | |
|---|---|---|---|
| 110 | Getriebe | 162 | Versorgungsleitung zur Kupplung |
| 112 | Fluidbeaufschlagungssystem | 164 | temperaturabhängiges Ventil |
| 114 | Pumpe | 166 | Umkehrring |
| 116 | Fluidsumpf | 168 | erste Öffnung |
| 118 | Fluidreservoir | 170 | zweite Öffnung |
| 120 | erster Fluidabfluss | 172 | Pumpenradsatz |
| 122 | Kupplung | 174 | Fluid |
| 124 | Pumpenmotor | | |
| 126 | Ventil | | |
| 128 | zweiter Fluidabfluss | | |
| 130 | Blende | | |
| 132 | Erfassungseinrichtung | | |
| 134 | Drucksensor | | |
| 136 | Drehzahlsensor | | |
| 138 | Drehrichtungssensor | | |
| 140 | Spritzfluid | | |
| 142 | Filter | | |
| 144 | Getriebegehäuse | | |
| 146 | Ansteuerung | | |
| 148 | Schnittstelle | | |
| 150 | Steuerungsausgang | | |
| 152 | Wegeventil | | |
| 154 | Kupplungskühlfluidleitung | | |
| 156 | Drehdurchführung | | |
| 158 | ansteuerbares Ventil | | |
| 160 | Zahnradsatz | | |

## Patentansprüche

1. Getriebe (110) für ein Kraftfahrzeug, wobei das Getriebe (110) mindestens ein Fluidbeaufschlagungssystem (112) umfasst, wobei das Fluidbeaufschlagungssystem (112) mindestens eine Pumpe (114) umfasst, wobei das Fluidbeaufschlagungssystem (112) mindestens einen Fluidsumpf (116) umfasst, wobei das Fluidbeaufschlagungssystem (112) mindestens ein Fluidreservoir (118) umfasst, wobei das Fluidreservoir (118) mindestens einen ersten Fluidabfluss (120) in den Fluidsumpf (116) umfasst, wobei der erste Fluidabfluss (120) abhängig von einer Zustandsgröße steuerbar ist, **dadurch gekennzeichnet, dass** das Fluidbeaufschlagungssystem (112) mindestens einen zweiten Fluidabfluss (128) umfasst, wobei der zweite Fluidabfluss (128) nicht regelbar ist.

2. Getriebe (110) nach dem vorhergehenden Anspruch, wobei das Getriebe (110) mindestens eine Kupplung (122) umfasst.

3. Getriebe (110) nach einem der vorhergehenden Ansprüche, wobei die Zustandsgröße eine Fluidbeaufschlagungsgröße ist, wobei die Fluidbeaufschlagungsgröße mindestens eine Größe umfasst ausgewählt aus: einem Fluiddruck; einem Fluidvolumenstrom; einer Drehzahl der Pumpe (114); einer Drehzahl eines Pumpenmotors (124); einer Drehrichtung der Pumpe (114); einer Drehrichtung des Pumpenmotors (124); einem Fluidbedarf und einem Staudruck.

4. Getriebe (110) nach einem der vorhergehenden Ansprüche, wobei der erste Fluidabfluss (120) aktiv und/oder passiv steuerbar ist.

5. Getriebe (110) nach einem der vorhergehenden Ansprüche, wobei der erste Fluidabfluss (120) mindestens eine Blende (130) und/oder mindestens eine Drossel und/oder mindestens ein Ventil (126), insbesondere mindestens ein temperaturabhängiges Ventil (164) und/oder mindestens ein druckabhängiges Ventil und/oder mindestens ein temperatur- und druckabhängiges Ventil, umfasst.

6. Getriebe (110) nach einem der vorhergehenden Ansprüche, wobei das Getriebe (110) mindestens eine Erfassungseinrichtung (132) zur Erfassung der Zustandsgröße umfasst, insbesondere mindestens einen Drucksensor (134) und/oder mindestens einen Drehzahlsensor (136) und/oder mindestens einen Drehrichtungssensor (138).

7. Getriebe (110) nach einem der vorhergehenden Ansprüche, wobei das Fluidreservoir (118) durch Spritzfluid (140) und/oder durch von mindestens einer Blende (130) abgeleitetes Fluid (174) befüllbar ist.

8. Getriebe (110) nach einem der vorhergehenden Ansprüche, wobei das Fluidbeaufschlagungssystem (112) mindestens einen Filter (142) umfasst.

9. Getriebe (110) nach einem der vorhergehenden Ansprüche, wobei das Getriebe (110) mindestens ein Getriebegehäuse (144) umfasst, wobei das Fluidreservoir (118) zumindest teilweise in das Getriebegehäuse (144) integriert ist.

10. Getriebe (110) nach einem der vorhergehenden Ansprüche, wobei das Getriebe (110) mindestens eine Ansteuerung (146) umfasst.

11. Getriebe (110) nach dem vorhergehenden Anspruch, wobei die Ansteuerung (146) mindestens einen Steuerungsausgang (150) umfasst, wobei das Getriebe (110) derart ausgestaltet ist, dass der Steuerungsausgang (150) gleichzeitig die Pumpe (114) und den ersten Fluidabfluss (120) steuert.

12. Verfahren zum Betrieb des Getriebes (110) nach einem der vorhergehenden Ansprüche, wobei das Getriebe (110) mindestens ein Fluidbeaufschlagungssystem (112) umfasst, wobei das Fluidbeaufschlagungssystem (112) mindestens eine Pumpe (114) umfasst, wobei das Fluidbeaufschlagungssystem (112) mindestens einen Fluidsumpf (116) umfasst, wobei das Fluidbeaufschlagungssystem (112) mindestens ein Fluidreservoir (118) umfasst, wobei das Fluidreservoir (118) mindestens einen ersten Fluidabfluss (120) in den Fluidsumpf (116) umfasst, wobei der erste Fluidabfluss (128) abhängig von einer Zustandsgröße gesteuert wird, und wobei das Fluidbeaufschlagungssystem (112) mindestens einen zweiten Fluidabfluss (128) umfasst, wobei der zweite Fluidabfluss (128) nicht regelbar ist.

## Claims

1. Gearbox (110) for a motor vehicle, wherein the gearbox (110) comprises at least one fluid supply system (112), wherein the fluid supply system (112) comprises at least one pump (114), wherein the fluid supply system (112) comprises at least one fluid sump (116), wherein the fluid supply system (112) comprises at least one fluid reservoir (118), wherein the fluid reservoir (118) comprises at least a first fluid outflow (120) leading into the fluid sump (116), wherein the first fluid outflow (120) can be controlled as a function of a state variable, **characterized in that** the fluid supply system (112) comprises at least a second fluid outflow (128), wherein the second fluid outflow (128) cannot be regulated.

2. Gearbox (110) according to the preceding claim, wherein the gearbox (110) comprises at least one clutch (122).

3. Gearbox (110) according to one of the preceding claims, wherein the state variable is a fluid supply variable, wherein the fluid supply variable comprises at least one variable selected from: a fluid pressure; a fluid volume flow; a rotational speed of the pump (114); a rotational speed of a pump motor (124); a rotational direction of the pump (114); a rotational direction of the pump motor (124); a fluid requirement and a banking-up pressure.

4. Gearbox (110) according to one of the preceding claims, wherein the first fluid outflow (120) is controllable actively and/or passively.

5. Gearbox (110) according to one of the preceding claims, wherein the first fluid outflow (120) comprises at least one orifice (130) and/or at least one restrictor and/or at least one valve (126), in particular at least one temperature-dependent valve (164) and/or at least one pressure-dependent valve and/or at least one temperature-dependent and pressure-dependent valve.

6. Gearbox (110) according to one of the preceding claims, wherein the gearbox (110) comprises at least one sensing device (132) for sensing the state variable, in particular at least one pressure sensor (134) and/or at least one rotational speed sensor (136) and/or at least one rotational direction sensor (138).

7. Gearbox (110) according to one of the preceding claims, wherein the fluid reservoir (118) can be filled by means of sprayed fluid (140) and/or by fluid (174) diverted by at least one orifice (130).

8. Gearbox (110) according to one of the preceding claims, wherein the fluid supply system (112) comprises at least one filter (142).

9. Gearbox (110) according to one of the preceding claims, wherein the gearbox (110) comprises at least one gearbox housing (144), wherein the fluid reservoir (118) is at least partially integrated into the gearbox housing (144).

10. Gearbox (110) according to one of the preceding claims, wherein the gearbox (110) comprises at least one actuation means (146).

11. Gearbox (110) according to the preceding claim, wherein the actuation means (146) comprises at least one control output (150), wherein the gearbox (110) is configured in such a way that the control output (150) simultaneously controls the pump (114) and the first fluid outflow (120).

12. Method for operating the gearbox (110) according to one of the preceding claims, wherein the gearbox (110) comprises at least one fluid supply system (112), wherein the fluid supply system (112) comprises at least one pump (114), wherein the fluid supply system (112) comprises at least one fluid sump (116), wherein the fluid supply system (112) comprises at least one fluid reservoir (118), wherein the fluid reservoir (118) comprises at least a first fluid outflow (120) leading into the fluid sump (116), wherein the first fluid outflow (128) is controlled as a function of a state variable, and wherein the fluid supply system (112) comprises at least a second fluid outflow (128), wherein the second fluid outflow (128) cannot be regulated.

## Revendications

1. Transmission (110) pour un véhicule automobile, la transmission (110) comprenant au moins un système de sollicitation de fluide (112), le système de sollicitation de fluide (112) comprenant au moins une pompe (114), le système de sollicitation de fluide (112) comprenant au moins un carter de fluide (116), le système de sollicitation de fluide (112) comprenant au moins un réservoir de fluide (118), le réservoir de fluide (118) comprenant au moins une première sortie de fluide (120) dans le carter de fluide (116), la première sortie de fluide (120) pouvant être commandée en fonction d'une grandeur d'état, **caractérisée en ce que** le système de sollicitation de fluide (112) comprend au moins une deuxième sortie de fluide (128), la deuxième sortie de fluide (128) ne pouvant pas être régulée.

2. Transmission (110) selon la revendication précédente, la transmission (110) comprenant au moins un embrayage (122).

3. Transmission (110) selon l'une quelconque des revendications précédentes, dans laquelle la grandeur d'état est une grandeur de sollicitation de fluide, la grandeur de sollicitation de fluide comprenant au moins une grandeur choisie parmi : une pression de fluide ; un débit volumique de fluide ; une vitesse de rotation de la pompe (114) ; une vitesse de rotation d'un moteur de pompe (124) ; un sens de rotation de la pompe (114) ; un sens de rotation du moteur de pompe (124) ; un besoin en fluide et une pression dynamique.

4. Transmission (110) selon l'une quelconque des revendications précédentes, dans laquelle la première sortie de fluide (120) peut être commandée activement et/ou passivement.

5. Transmission (110) selon l'une quelconque des revendications précédentes, dans laquelle la première sortie de fluide (120) comprend au moins un diaphragme (130) et/ou au moins un étranglement et/ou au moins une soupape (126), en particulier au moins une soupape dépendant de la température (164) et/ou au moins une soupape dépendant de la pression et/ou au moins une soupape dépendant de la température et de la pression.

6. Transmission (110) selon l'une quelconque des revendications précédentes, dans laquelle la transmission (110) comprend au moins un dispositif de détection (132) pour détecter la grandeur d'état, en particulier au moins un capteur de pression (134) et/ou au moins un capteur de vitesse de rotation (136) et/ou au moins un capteur de sens de rotation (138).

7. Transmission (110) selon l'une quelconque des revendications précédentes, dans laquelle le réservoir de fluide (118) peut être rempli par du fluide d'injection (140) et/ou par du fluide (174) dérivé d'au moins un diaphragme (130).

8. Transmission (110) selon l'une quelconque des revendications précédentes, dans laquelle le système de sollicitation de fluide (112) comprend au moins un filtre (142).

9. Transmission (110) selon l'une quelconque des revendications précédentes, dans laquelle la transmission (110) comprend au moins un boîtier de transmission (144), le réservoir de fluide (118) étant intégré au moins en partie dans le boîtier de transmission (144).

10. Transmission (110) selon l'une quelconque des revendications précédentes, dans laquelle la transmission (110) comprend au moins une commande (146).

11. Transmission (110) selon la revendication précédente, dans laquelle la commande (146) comprend au moins une sortie de commande (150), la transmission (110) étant configurée de telle sorte que la sortie de commande (150) commande simultanément la pompe (114) et la première sortie de fluide (120).

12. Procédé pour faire fonctionner la transmission (110) selon l'une quelconque des revendications précédentes, dans lequel la transmission (110) comprend au moins un système de sollicitation de fluide (112), le système de sollicitation de fluide (112) comprenant au moins une pompe (114), le système de sollicitation de fluide (112) comprenant au moins un carter de fluide (116), le système de sollicitation de fluide (112) comprenant au moins un réservoir de fluide (118), le réservoir de fluide (118) comprenant au moins une première sortie de fluide (120) dans le carter de fluide (116), la première sortie de fluide (128) étant commandée en fonction d'une grandeur d'état, et le système de sollicitation de fluide (112) comprenant au moins une deuxième sortie de fluide (128), la deuxième sortie de fluide (128) ne pouvant pas être régulée.
